# EUROPEAN PATENT APPLICATION

(11) **EP 2 343 204 A1**
(43) Date of publication of application: **13.07.2011**
(21) Application number: 08876905.4
(22) Date of filing: 05.12.2008
(51) Int. Cl.: B60H 1/34

(54) **AIR BLOWOUT DEVICE**

(30) Priority: 30.10.2008 JP 2008279748
(71) Applicant: Howa Plastics Co., Ltd., Aichi 470-0496 (JP)
(72) Inventor: HIBINO, Yoshimitsu, Toyota-shi Aichi 4700496 (JP)
(74) Representative: Kehl, Günther
(86) International application number: PCT/JP2008/072594
(87) International publication number: WO 2010/050076

(57) **Abstract**

An airflow adjustment member 30 includes the following unitarily formed members: a closing airflow direction adjustment plate 31, a plurality of rear airflow direction adjustment plates (a first rear airflow direction adjustment plate 32, a second rear airflow direction adjustment plate 33, and a third rear airflow direction adjustment plate 34), and connection members (a first connection member 35 and a second connection member 36). When air blown out from an air blowing device 10 is to be shut off, an opening portion of the air blowing device 10 is closed by a single closing airflow direction adjustment plate 31. The positions of front-end portions of the rear airflow direction adjustment plates are determined according to distances of the rear airflow direction adjustment plates from the closing airflow direction adjustment plate 31. Thereby, there can be provided the air blowing device which can exhibit excellent appearance at the time of shutoff of airflow, can ensure a sufficient airflow rate at the time of adjustment of the direction of airflow, and can provide excellent cost of manufacture.

## Description

### TECHNICAL FIELD

The present invention relates to an air blowing device for use in an air conditioner of an automobile or the like.

### BACKGROUND ART

Conventionally, there is proposed an air blowing device for switching between supply and shutoff of cooled or heated air or the like to the interior of an automobile or the like and for adjusting the direction of an airflow in the case of supply of cooled or heated air or the like, for the purpose of adjusting the interior atmosphere of the automobile or the like. One conventional air blowing device includes a tubular body having a circular cross section, and a plurality of airflow direction adjustment plates disposed within the tubular body. The air blowing device is configured to change the blowing direction of airflow by adjusting the angle of the plurality of airflow direction adjustment plates (refer to, for example, Japanese Patent Application Laid-Open No. 2007-55396).

### DISCLOSURE OF THE INVENTION

In the above-mentioned conventional air blowing device, the plurality of independent airflow direction adjustment plates are connected to one another by connection members. The plurality of airflow direction adjustment plates which are connected to one another are pivotally supported in the interior of the tubular body via a predetermined pivot member and pivotally move in an interlocking relation. However, since these members (airflow direction adjustment plates, connection members, pivot members, etc.) are manufactured independently, the number of steps required for manufacture of the air blowing device is large. Furthermore, since the air blowing device is manufactured through sequential assembly of the members, the assembly work is complicated and time-consuming. Therefore, the air blowing device involves a problem of high cost of manufacture.

Further, in the above-mentioned conventional air blowing device, when the supply of air to the interior of an automobile or the like is shut off (hereinafter, may be referred to as "at the time of air supply shutoff"), its air outlet port is closed by two airflow direction adjustment plates. Thus, the boundary line between the two airflow direction adjustment plates appears on the interior side of the air blowing device. The boundary line impairs the appearance of the air blowing device at the time of air supply shutoff. Hereinafter, a surface which, at the time of air supply shutoff, closes an opening portion of the air blowing device and appears on the outside of the tubular body is referred to as the "closing surface".

The present invention has been achieved to solve the above-mentioned problems. Specifically, an object of the invention is to provide an air blowing device which can be manufactured at low cost by reducing the number of steps of manufacture and man-hours of assembly. Another object of the invention is to provide an air blowing device which exhibits enhanced appearance of the closing surface at the time of air supply shutoff.

More specifically, an air blowing device of the present invention comprises:
a tubular body configured to form an air outflow channel, the tubular body having a rear-end open portion allowing an air to flow into the tubular body and a front-end open portion allowing the air to blow out from the tubular body; and
an airflow adjustment member supported in the tubular body so as to be pivotally movable about a pivotal axis perpendicular to an axis of the tubular body and configured to adjust a direction of the air blown out from the tubular body.

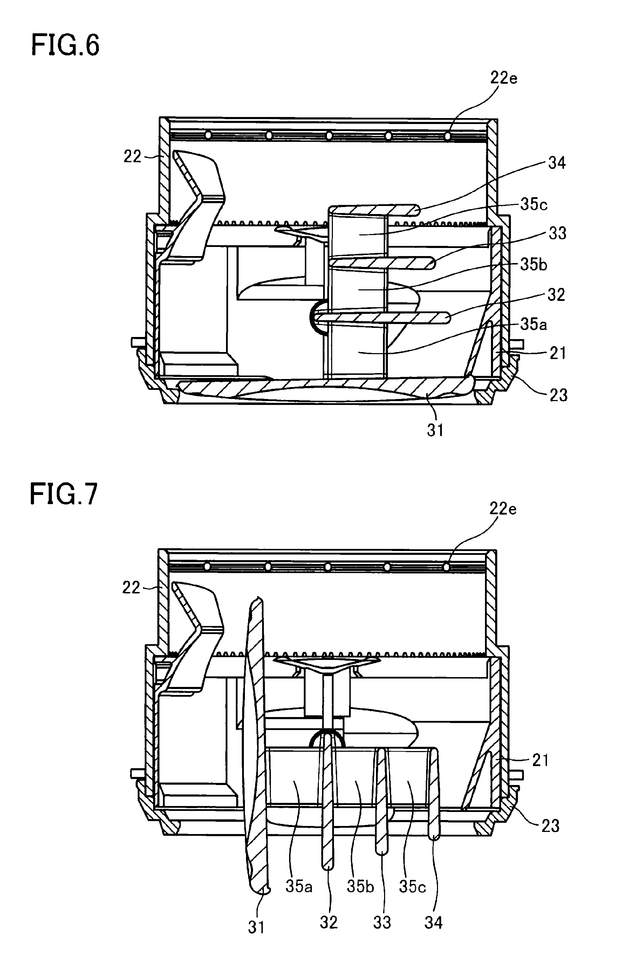

In the air blowing device of the present invention, the airflow adjustment member includes: a connection member; and at least three airflow direction adjustment plates being connected in parallel with one another by the connection member. The airflow adjustment member is configured to be pivotally movable about the pivotal axis in a range from a first rotary position (see FIG. 6) to a second rotary position (see FIG. 7).

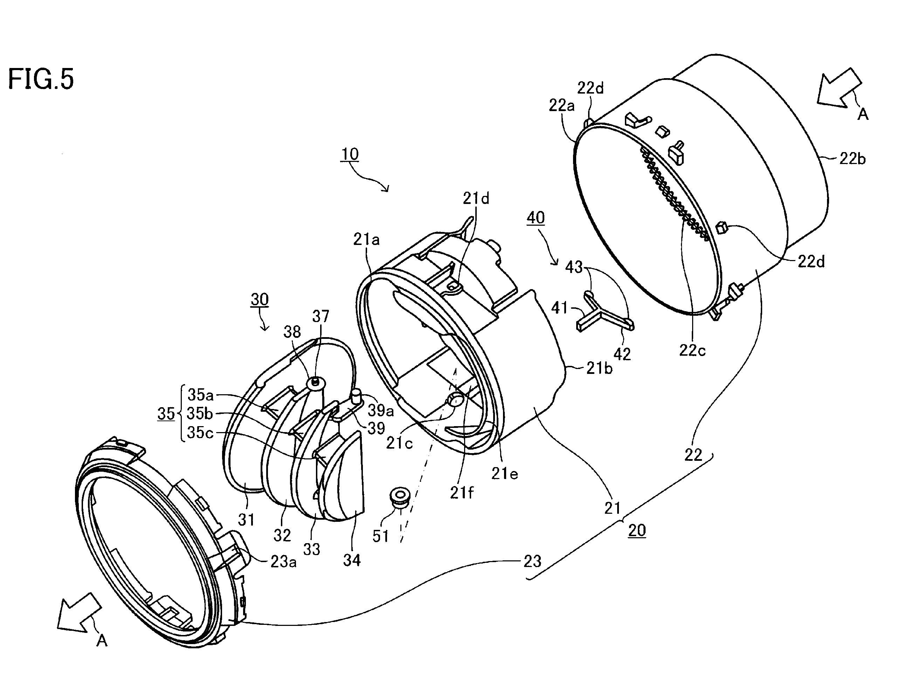

The connection member and the at least three airflow direction adjustment plates are formed of same material in an inseparable unitary manner (see FIG. 5).

One of a pair of airflow direction adjustment plates located at opposite ends of the at least three airflow direction adjustment plates is a closing airflow direction adjustment plate. The closing airflow direction adjustment plate is configured to close the front-end open portion of the tubular body when the airflow adjustment member is positioned at the first rotary position. Further, the closing airflow direction adjustment plate is configured to be parallel to the axis of the tubular body when the airflow adjustment member is positioned at the second rotary position.

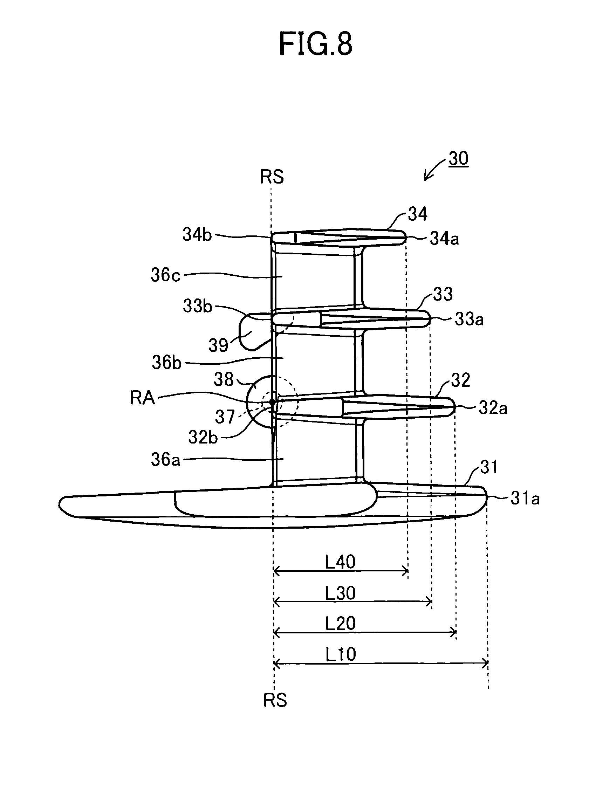

Additionally, the air blowing device is configured such that, the closing airflow direction adjustment plate has the largest distance in distances each from "a front-end portion of each of the at least three airflow direction adjustment plates" to "a reference plane perpendicular to the closing airflow direction adjustment plate and including the pivotal axis" when the airflow adjustment member is positioned at the second rotary position, and the other one of the at least three airflow direction adjustment plates located farther from the closing airflow direction adjustment plate than the other different one of the at least three airflow direction adjustment plates has smaller distance from a front-end portion thereof to the reference plane than the different one (see FIG. 8).

As mentioned above, in the air blowing device of the present invention, the connection member and a plurality of airflow direction adjustment plates used to form the airflow adjustment member are formed unitarily. Thus, there is no need to separately manufacture the plurality of airflow direction adjustment plates and the connection member, so that the number of steps of manufacture can be reduced. Additionally, there can be eliminated the work of connection between the connection member and the plurality of airflow direction adjustment plates. Further, the air blowing device of the present invention is assembled such that "the plurality of airflow direction adjustment plates and the connection member", which are united into a single shape, are supported in the tubular body. Accordingly, the plurality of airflow direction adjustment plates and the connection member can be readily assembled to the tubular body. As a result, since the number of steps of manufacture of the air blowing device and man-hours of assembly can be reduced, the cost of manufacture of the air blowing device can be reduced.

Further, in the air blowing device of the present invention, when the airflow adjustment member is positioned at the first rotary position, "one of a pair of airflow direction adjustment plates located at opposite ends of the at least three airflow direction adjustment plates (i.e., the closing airflow direction adjustment plate)" closes the front-end opening portion of the tubular body (hereinafter, a state in which the front-end opening portion of the tubular body is closed may be referred to as the "fully-closed state"). Further, when the airflow adjustment member is positioned at the second rotary position, an airflow is blown out in a direction parallel to the axis of the air blowing device (hereinafter, a state in which an airflow is blown out in a direction parallel to the axis of the air blowing device may be referred to as the "fully-opened state"). As mentioned above, when the airflow adjustment member is in the fully-closed state (i.e., at the time of air supply shutoff), the opening portion of the tubular body is closed by one (a single) closing airflow direction adjustment plate. Accordingly, as compared with the case where the opening portion is closed by means of two or more airflow direction adjustment plates, the air blowing device of the present invention can impart enhanced appearance to the closing surface at the time of air supply shutoff.

Further, in the air blowing device of the present invention, the "distance between the front-end portion and the reference plane (hereinafter, may be referred to as the 'front-length')" of the closing airflow direction adjustment plate is longer than the front-lengths of the airflow direction adjustment plates (hereinafter, may be referred to as the "rear airflow direction adjustment plates") other than the closing airflow direction adjustment plate. Thus, at the time of air supply shutoff, the front-end open portion (opening portion) of the tubular body can be reliably closed by means of the closing airflow direction adjustment plate. Further, the area of the opening portion of the tubular body can be increased, so that, when the opening portion is opened, a high airflow rate can be ensured. In addition, herein, as mentioned above, the term "front" refers to a side of each member which corresponds to a side from which an airflow is blown out, and the term "rear" refers to a side of each member which corresponds to a side from which an airflow flows in.

Further, in the air blowing device of the present invention, one airflow direction adjustment plate located farther from the closing airflow direction adjustment plate than the other airflow direction adjustment plate has smaller front-length than the other airflow direction adjustment plate. Thus, during pivotal movement of the airflow adjustment member between the first rotary position and the second rotary position, the front-end portions of the rear airflow direction adjustment plates do not come into contact with the tubular body (inner surface of the tubular body). In other words, the rear airflow direction adjustment plates are configured so as not to hinder the pivotal movement of the entire airflow adjustment member. Further, since the front-lengths of the airflow direction adjustment plates decrease sequentially, in the fully-opened state, the airflow adjustment member has a favorable appearance.

As described above, the present invention can provide an air blowing device in which the front-end portions of the airflow direction adjustment plates do not hinder the pivotal movement of the airflow adjustment member and which can have a favorable appearance at the time of air supply shutoff (fully-closed state) and can be manufactured at low cost.

In the above-mentioned air blowing device of the present invention, it is preferable that the closing airflow direction adjustment plate has the largest distance in distances each from a rear-end portion of each of the at least three airflow direction adjustment plates to the reference plane when the airflow adjustment member is positioned at the second rotary position. The reason for the preference is described below.

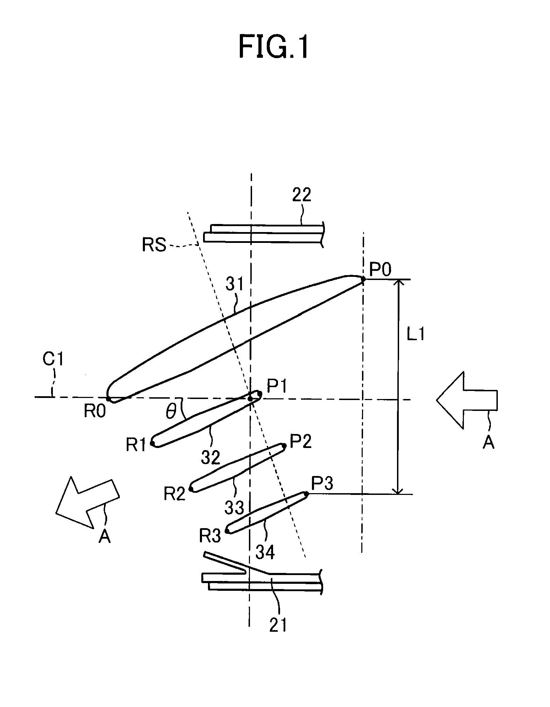

By means of pivotal movement of the airflow adjustment member between the first rotary position (fully-closed state) and the second rotary position (fully-opened state), the direction of airflow (hereinafter, may be referred to as the "wind direction") blown out from the air blowing device can be adjusted. Namely, as schematically shown in FIG. 1, by means of bringing the airflow adjustment member into a state of having a predetermined angle θ with respect to the axis of the tubular body (hereinafter, this state may be referred to as the "wind direction adjusting state"), an airflow (indicated by arrow A) is blown out in a direction corresponding to the angle θ.

At this time, the volume per unit time of "air blown out with the angle θ with respect to the axis of the tubular body" (volume flow rate; hereinafter, may be referred to merely as the "inclined airflow rate") depends on a distance L1 (hereinafter, may be referred to as the "effective rear-end opening distance"), which is a distance between "a rear-end portion P0 of the closing airflow direction adjustment plate" and "a rear-end portion P3 of the airflow direction adjustment plate disposed most distant from the closing airflow direction adjustment plate" as projected on a plane perpendicular to "the airflow directed from the rear-end side to the front-end side of the tubular body (axis C1 of the tubular body)." That is, by means of increasing the effective rear-end opening distance, the inclined airflow rate can be increased. By means of increasing the inclined airflow rate, the airflow along a direction corresponding to the angle θ can be increased.

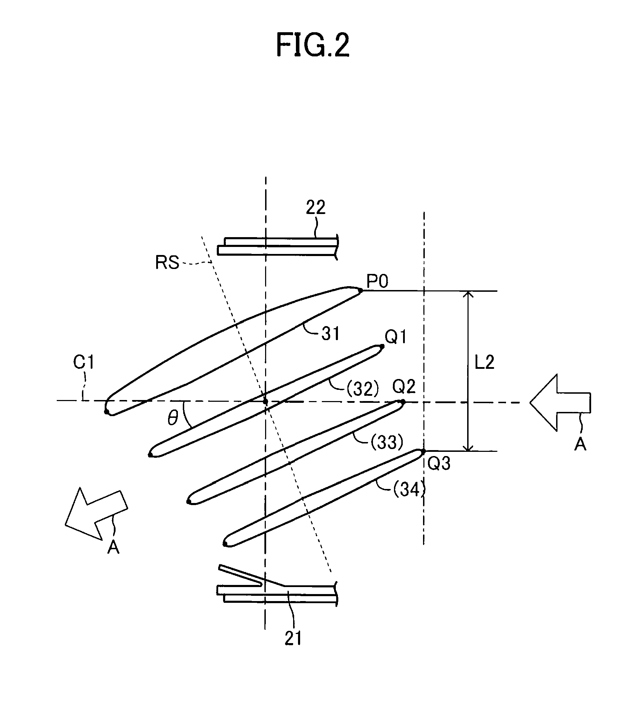

According to the above-mentioned configuration, as shown in FIG. 1, the "distance between the rear-end portion P0 and the reference plane RS (hereinafter, may be referred to as the 'rear-length')" of the closing airflow direction adjustment plate is longer than the rear-length of each of the rear airflow direction adjustment plates. In contrast, as shown in FIG. 2, in comparison under the same angle θ, in the case where the closing airflow direction adjustment plate and the rear airflow direction adjustment plates have the same rear-length, the effective rear-end opening distance (distance L2) between "the end portion P0 of the closing airflow direction adjustment plate" and "a rear-end portion Q3 of the airflow direction adjustment plate disposed most distant from the closing airflow direction adjustment plate" is smaller than the above-mentioned distance L1.

Thus, as compared with the case where the closing airflow direction adjustment plate and the rear airflow direction adjustment plates have the same rear-length (see FIG. 2), the above-mentioned configuration (see FIG. 1) can increase the effective rear-end opening distance as measured when the airflow adjustment member is inclined with respect to the axis C1 of the tubular body. Thus, when the airflow adjustment member is in the wind direction adjusting state, a sufficient inclined airflow rate can be ensured.

Further, in the above-mentioned air blowing device of the present invention, it is preferable that each of the at least three airflow direction adjustment plates except for the closing airflow direction adjustment plate (i.e., the rear airflow direction adjustment plates) has a distance from the "rear" end portion thereof to the reference plane (i.e., the rear-length) smaller than the corresponding distance from the "front" end portion thereof to the reference plane (i.e., the front-length).

In this case, as shown in FIG. 1, the rear airflow direction adjustment plates are configured such that the front-lengths (the distances between the reference plane RS and individual end portions R1, R2, and R3) are longer than the corresponding rear-lengths (the corresponding distances between the reference plane RS and individual end portions P1, P2, and P3). Thus, similar to the aforementioned case, as compared with the case where the closing airflow direction adjustment plate and the rear airflow direction adjustment plates have the same rear-length (see FIG. 2), the effective rear-end opening distance as measured when the airflow adjustment member is in the wind direction adjusting state can be increased. Accordingly, a sufficient inclined airflow rate can be ensured.

Further, in the above-mentioned air blowing device of the present invention, it is preferable that each of the at least three airflow direction adjustment plates except for the closing airflow direction adjustment plate has a rear-end portion residing in the reference plane.

By virtue of the above-mentioned configuration, similar to the aforementioned case, the effective rear-end opening distance as measured when the airflow adjustment member is in the wind direction adjusting state can be increased. As a result, a sufficient inclined airflow rate can be ensured. Further, since the rear-end portions of the rear airflow direction adjustment plates are arrayed in the predetermined plane, "the flow rates of air blown out from a space between an arbitrary one plate of rear airflow direction adjustment plates and a rear airflow direction adjustment plate adjacent to the arbitrary one plate" become substantially uniform. Thus, there can be avoided a problem in that large amount of air is locally blown out.

In addition, the rear-end portions of the rear airflow direction adjustment plates mentioned above may reside in a plane which is located on a side toward the rear-end of the tubular body with respect to the reference plane and is in parallel with the reference plane and which is located between "a plane parallel to the reference plane and passing through the rear-end portion P0 of the closing airflow direction adjustment plate" and "the reference plane". As compared with at least the case where the closing airflow direction adjustment plate and the rear airflow direction adjustment plates have the same rear-length (see FIG. 2), this configuration can increase the effective rear-end opening distance as measured when the airflow adjustment member is in the wind direction adjusting state.

Further, in the above-mentioned air blowing device of the present invention, it is preferable that a distance from an inner surface of the tubular body to a portion of the connection member which is the closest to the inner surface of the tubular body with respect to a direction parallel to the pivotal axis being equal to or larger than a predetermined first flow channel ensuring distance.

If "the connection member for unifying the at least three airflow direction adjustment plates" is located in the vicinity of the inner surface of the tubular body, a space between the connection member and the inner surface of the tubular member becomes very narrow. Thus, air substantially fails to pass through the space. In other words, the effective cross-sectional area of flow channel for airflow drops by an amount corresponding to the space between the connection member and the inner surface of the tubular body. Further, the connection member disturbs an airflow in the vicinity of the inner surface of the tubular body. These factors increase pressure loss, thereby raising a problem of drop in airflow rate.

In contrast, according to the above-mentioned configuration, when the airflow adjustment member is in the fully-opened state, the connection member connects the airflow direction adjustment plates while being spaced apart from a portion of the inner surface of the tubular body by a predetermined distance (first flow channel ensuring distance) or more. Thus, a sufficient distance for passage of airflow can be ensured between the connection member and the inner surface of the tubular body. As a result, a drop in the effective cross-sectional area of flow channel can be suppressed, so that a sufficient airflow rate can be ensured. In addition, the distance between the connection member and a portion of the inner surface of the tubular member is preferably the same over the entire region of the connection member which faces the inner surface of the tubular body, but is not necessarily the same over the entire region.

In the above-mentioned air blowing device of the present invention, it is preferable that the connection member includes a first connection member and a second connection member, and that the first connection member and the second connection member are spaced apart from each other by a predetermined second flow channel ensuring distance or more with respect to a direction parallel to the pivotal axis.

As mentioned above, when the airflow adjustment member is in the fully-opened state, the connection member and the inner surface of the tubular body are spaced apart from each other by a predetermined distance (first flow channel ensuring distance) or more. Thus, in the case where the connection member includes two members; namely, the first connection member and the second connection member, the first connection member is spaced apart from one portion of the inner surface of the tubular body by the first flow channel ensuring distance or more, and the second connection member is spaced apart from another portion of the inner surface of the tubular body which faces the one portion by the first flow channel ensuring distance or more. Thus, as the distance between each of the two connection members and the inner surface of the tubular body increases, the distance between the two connection members decreases. As a result, if the first flow channel ensuring distance is excessively large, air encounters difficulty in flowing through a space between the two connection members. Thus, similar to the above-mentioned case where "the connection member or the like is located in the vicinity of the inner surface of the tubular body," the effective cross-sectional area of flow channel may drop.

Thus, in the above-mentioned configuration, in the case where the airflow direction adjustment plates are connected by means of the two connection members, the two connection members are spaced apart from each other by a predetermined distance (second flow channel ensuring distance) or more. By virtue of this arrangement, there can be avoided a drop in the effective cross-sectional area of flow channel, which could otherwise result from excessive closeness of the two connection members. As a result, while a drop in the effective cross-sectional area of flow channel is suppressed to the greatest possible extent, a sufficient airflow rate can be ensured. At this time, the distance between the two connection members is not necessarily the same over the entire region in which the two connection members face each other. In this case, "the distance between the first connection member and one portion of the inner surface of the tubular body" and "the distance between the second connection member and another portion of the inner surface of the tubular body which faces the one portion" are preferably the same, but are not necessarily the same.

When "the distance between the first connection member and one portion of the inner surface of the tubular body" and "the distance between the second connection member and another portion of the inner surface of the tubular body which faces the one portion" are the same distance X (for example, see a distance D1 shown in FIG. 9), the ratio of "a distance Y (for example, see a distance D2 shown in FIG. 9) between the first connection member and the second connection member with respect to a direction parallel to the pivotal axis" to the distance X; i.e., the ratio Y/X, is preferably from 0.5 to 2.0 over the entire region in which the two connection members face each other, more preferably from 1.0 to 2.0.

Further, in the above-mentioned air blowing device of the present invention, it is preferable that the first connection member is curved so as to extend along a portion of the inner surface of the tubular body near the first connection member when the airflow adjustment member is positioned at the second rotary position, and the second connection member is curved so as to extend along a portion of the inner surface of the tubular body near the second connection member when airflow adjustment member is positioned at the second rotary position.

According to the above-mentioned configuration, each of the connection members is formed so as to extend along "a portion of the inner surface of the tubular body" near the each of the connection member; thus, the difference between the maximum and minimum values of the first flow channel ensuring distance can be reduced. Thus, there can be reduced the difference between the maximum and minimum values of the area of "an air inlet port" defined by the connection member, the inner surface of the tubular body, and the adjacent airflow direction adjustment plates. As a result, a stable airflow can be obtained.

In addition, in the case where the tubular body is a cylindrical body (at least, the inner surface of the tubular body has a substantially circular cross-sectional shape taken perpendicular to the axis of the tubular body), the connection members are configured preferably such that their sectional shapes follow a substantially circular shape (arcuate shape). However, if difficulty is encountered in forming such connection members for various reasons, by means of configuring connection members such that their sectional shapes are as circular as possible, there can be yielded effects resembling those yielded when the connection members are arranged in a completely circular fashion.

Further, in the above-mentioned air blowing device of the present invention, it is preferable that one of two opposite surfaces of the closing airflow direction adjustment plate exposed to the exterior of the tubular body when the airflow adjustment member is positioned at the first rotary position has at least one recess portion formed thereon.

According to the above-mentioned configuration, through impartment of an appropriate shape to the recess portion, as compared with the case of a flat closing surface, the appearance of the closing surface can be enhanced. Also, the closing airflow direction adjustment plate, which has a large weight because of its large area, can be reduced in weight.

Further, in the above-mentioned air blowing device of the present invention, it is preferable that the recess portion is a plurality of grooves formed in parallel with one another.

According to the above-mentioned configuration, the recesses formed in parallel with one another can form a large number of projections functioning as "ribs." Thus, the rigidity of the closing airflow direction adjustment plate can be enhanced. Further, since a plurality of vertical stripes are formed on the closing surface, the appearance of the closing surface can be further enhanced. In addition, the recess portion includes: a recess portion composed of a plurality of grooves formed in parallel with one another and extending in a first direction; and a plurality of grooves formed in parallel with one another and extending in a second direction intersecting (preferably, intersecting at right angles) with the first direction. In this case, since lattice patterns are formed on the closing surface, the appearance of the closing surface can be further enhanced.

Further, members used in the air blowing device are generally obtained through molding of a synthetic resin or the like. For example, in manufacture of a molded product through injection molding of a synthetic resin, a depression, cracking, or the like (a so-called sink mark) may be formed on the surface of a molded product due to volumetric shrinkage at the time of solidification of the synthetic resin through cooling. By means of provision of a recess portion on the closing airflow direction adjustment plate as mentioned above, the occurrence of a sink mark can be suppressed. As a result, the appearance can be enhanced and the dimensional accuracy of the closing airflow direction adjustment plate can be enhanced.

The air blowing device of the present invention can also be configured as follows.

Specifically, the above-mentioned air blowing device of the present invention may be configured such that,
the tubular body includes: an inner register supporting the airflow adjustment member; a cylindrical retainer supporting the inner register so as to be pivotally movable manner in a circumferential direction; and an annular bezel fixed (fitted) to an outer circumferential edge of a front-end portion of the retainer.

Further, in the above-mentioned air blowing device of the present invention, it is preferable that the retainer is provided with a mesh portion so as to cover an open portion of its rear-end portion. The mesh portion, for example, may be the form of a honeycomb. The mesh portion can prevent entry of foreign matter into an air conditioner apparatus.

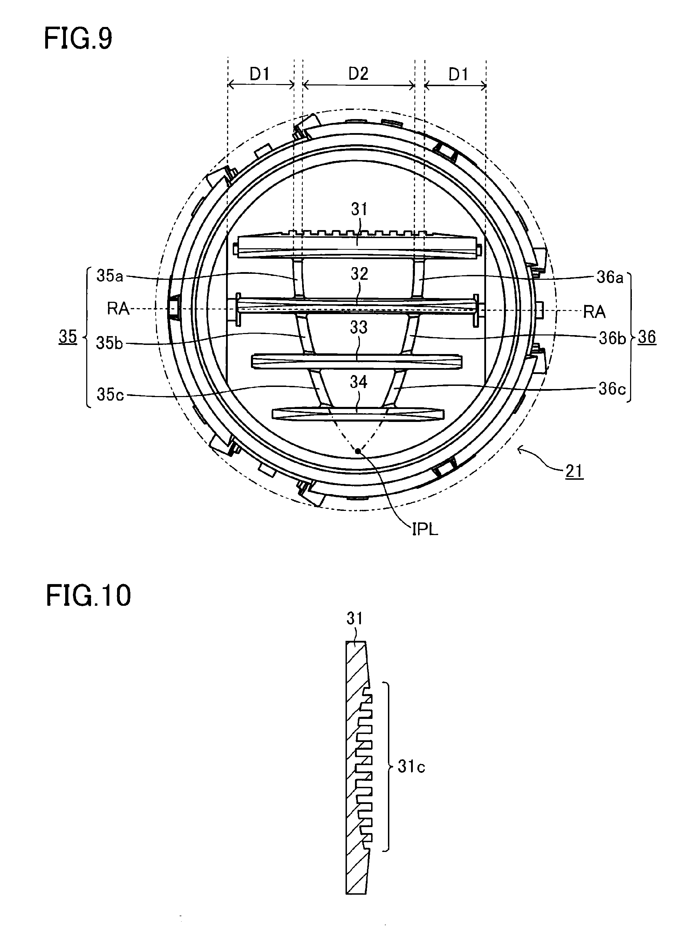

Further, in the above-mentioned air blowing device of the present invention, it is preferable that the first connection member and the second connection member are disposed in such a manner that a surface obtained by imaginarily extending the first connection member, a surface obtained by imaginarily extending the second connection member, and the reference plane intersect at a single position (a single straight line; see IPL in FIG. 9).

By virtue of the above-mentioned configuration, similar to the aforementioned case, there can be suppressed "a drop in the effective cross-sectional area of flow channel, which could otherwise result from excessive closeness of the first connection member and the second connection member," to the greatest possible extent. Thus, a sufficient airflow rate can be ensured.

Further, in the above-mentioned air blowing device of the present invention, it is preferable that each of the connection members has a streamlined sectional shape as cut by a plane parallel to the closing airflow direction adjustment plate.

By virtue of the above-mentioned profile, the influence of the connection members on airflow can be further reduced. As a result, the effective cross-sectional area of flow channel can be further increased.

In the above-mentioned air blowing device of the present invention, it is preferable that:
the closing airflow direction adjustment plate has a first projection (first engagement portion) formed at a front circumferential edge portion as viewed when the airflow adjustment member is positioned at the second rotary position;
the tubular body has an inclined portion which is formed at its front inner circumferential edge portion so as to be inclined toward the center of the open portion; and
the inclined portion has a second projection (second engagement portion) which is formed at its front-end portion and can be engaged with the first projection (first engagement portion) when the airflow adjustment member is positioned at the first rotary position.

By virtue of the above-mentioned structural feature, when the airflow adjustment member is in the fully-closed state (first rotary position), the first projection (first engagement portion) of the closing airflow direction adjustment plate and the second projection (second engagement portion) of the inclined portion provided on the tubular body are engaged with each other. As a result, air leakage at the time of air supply shutoff can be more reliably prevented.

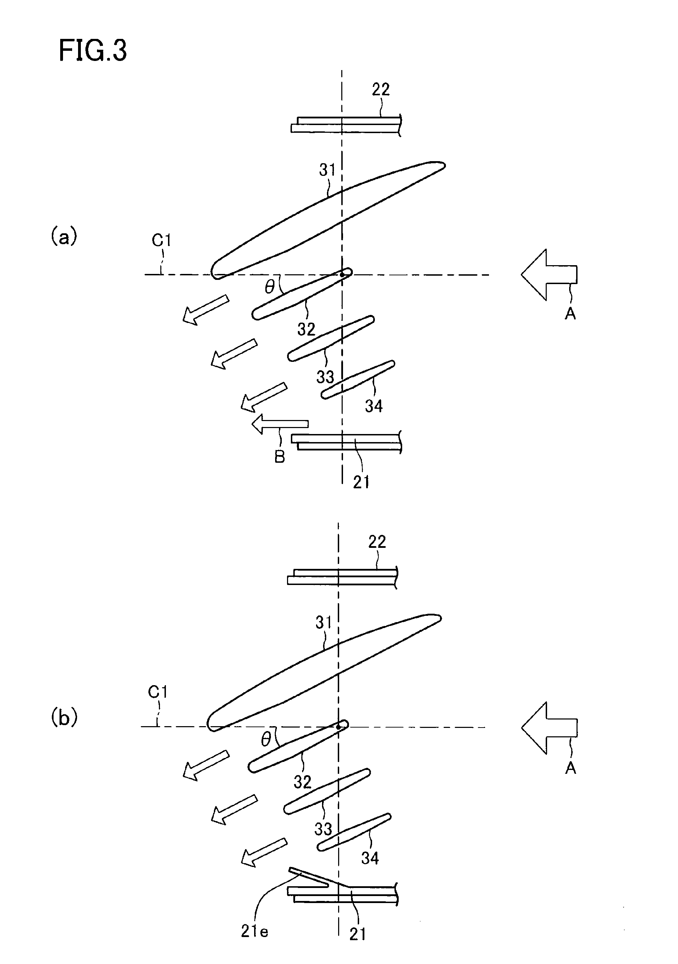

Further, as schematically shown in FIG. 3(a), in the case of no provision of the above-mentioned inclined portion on the inner circumferential surface of a front-end portion of the tubular body, when the airflow adjustment member is in the wind direction adjusting state, an airflow is blown out in a direction along the axis of the tubular body from a space between "the airflow direction adjustment plate located most distant from the closing airflow direction adjustment plate" and "the inner surface of the tubular body" (see arrow B). This airflow interferes with an airflow which has passed through the airflow adjustment member and is blown out in a direction corresponding to the angle θ. In contrast, as schematically shown in FIG. 3(b), through provision of the above-mentioned inclined portion 21e, the above-mentioned space can be narrowed. Thus, the amount of air blown out from the space can be reduced. As a result, the airflow passing through the airflow adjustment member can be blown out more reliably in the direction corresponding to the angle θ.

Further, in the above-mentioned air blowing device of the present invention, it is preferable that the inclined portion partially constitutes a portion which is formed at a front inner circumferential edge portion of the tubular body and has a V-shaped sectional shape as cut by a plane parallel to the axis of the tubular body.

By virtue of the above-mentioned structural feature, the weight of the tubular member can be reduced, and the occurrence of the above-mentioned sink mark on the inclined portion can be suppressed.

### BRIEF DESCRIPTION OF THE DRAWINGS

FIG. 1 is a schematic view showing a state in which an air blowing device of the present invention adjusts an airflow.
FIG. 2 is a schematic view showing a state in which an air blowing device of a reference example adjusts an airflow.
FIG. 3 is a pair of schematic views showing states in which an air blowing device of the present invention and an air blowing device of a reference example adjust airflows, respectively.
FIG. 4 is a perspective view showing an embodiment of an air blowing device of the present invention.
FIG. 5 is an exploded perspective view of the air blowing device shown in FIG. 4.
FIG. 6 is a sectional view of the air blowing device shown in FIG. 4 as cut by a plane along line 1-1 of FIG. 4.
FIG. 7 is a sectional view of the air blowing device shown in FIG. 4 as cut by a plane along line 1-1 of FIG. 4.
FIG. 8 is a side view of an airflow adjustment member shown in FIG. 5.
FIG. 9 is a front view of the airflow adjustment member shown in FIG. 5.
FIG. 10 is a sectional view of a closing airflow direction adjustment plate shown in FIG. 4 as cut by a plane along line 2-2 of FIG. 4.
FIG. 11 is an enlarged sectional view of a front-end portion of the closing airflow direction adjustment plate and its periphery as viewed when the closing airflow direction adjustment plate is in the fully-closed state shown in FIG. 6.

### BEST MODE FOR CARRYING OUT THE INVENTION

An embodiment of an air blowing device of the present invention will next be described with reference to the drawings.

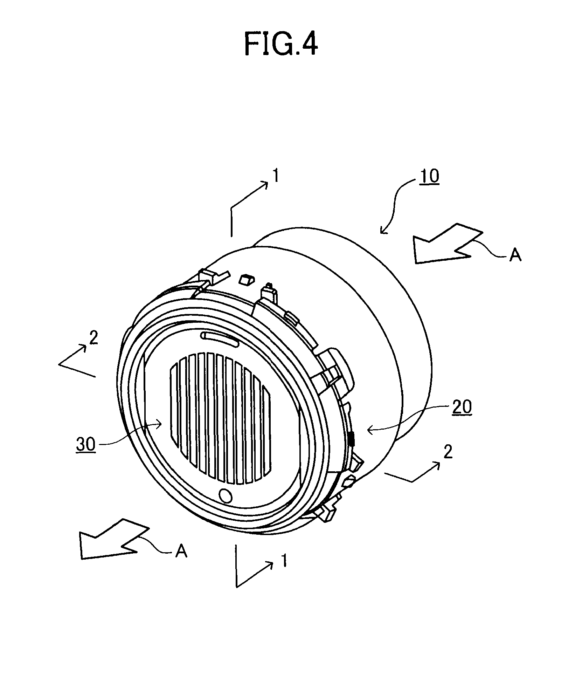

FIG. 4 is a perspective view showing an embodiment of an air blowing device of the present invention. FIG. 5 is an exploded perspective view of the air blowing device shown in FIG. 4. FIGS. 6 and 7 are sectional views of the air blowing device as cut by a plane along line 1-1 of FIG. 4.

As shown in FIG. 4, an air blowing device 10 includes a tubular body 20 and an airflow adjustment member 30 which is supported in the interior of the tubular body 20.

As shown in FIG. 5, the tubular body 20 is composed of: an inner register 21 for supporting the airflow adjustment member 30; a cylindrical retainer 22 to which the inner register 21 is fitted; and an annular bezel 23 which is fitted to a front-end portion of the retainer 22. The inner register 21, the retainer 22, and the bezel 23 are coaxially disposed. As indicated by arrows A in FIGS. 4 and 5, airflows into the air blowing device 10 from the rear-end side of the tubular body 20 (rear-end portion of the retainer 22) and is blown out from the front-end side of the bezel 23. The structures of the members are described below.

The inner register 21 is a cylindrical body whose front-end portion 21 a and rear-end portion 21 b are open. The inner register 21 has a thin-walled portion and thick-walled portions (portions whose inner circumferential surfaces are raised). The inner register 21 has two thick-walled portions. The two thick-walled portions are provided so as to face each other.

One of the thick-walled portions has a hollow, cylindrical mounting groove 21c (mounting recess). An annular sliding member 51, which has substantially the same shape as that of the mounting groove 21c, is mounted into the mounting groove 21 c (i.e., the sliding member 51 is fitted into the mounting groove 21 c in a non-rotatable manner). The sliding member 51 has a bearing hole at its center.

The other thick-walled portion of the inner register 21 has a bearing hole 21d formed therein so as to face (be coaxial with) the bearing hole of the sliding member 51.

Further, the thick-walled portion of the inner register 21 has a mounting hole portion 21f. The mounting hole portion 21f is a prismatic, hollow portion extending in the axial direction of the inner register 21 and is open at the rear-end portion 21 b.

An operation load application member 40 is mounted to the mounting hole portion 21f. The operation load application member 40 has a support portion 41 and a forked leg portion 42. Leg portions of the forked leg portion 42 have curved projections 43 formed on their respective tips. The operation load application member 40 is held by the inner register 21 in such a manner that, by means of the support portion 41 being inserted into the mounting hole portion 21f, the forked leg portion 42 projects rearward of the rear-end portion 21 b.

An inclined portion 21e is provided at a front inner circumferential edge portion of the inner register 21 so as to be inclined toward the center of an open portion of the front-end portion 21 a of the inner register 21.

The retainer 22 is a cylindrical body whose front-end portion 22a and rear-end portion 22b are open. That is, the retainer 22 has the front-end portion 22a which functions as an air outlet, and the rear-end portion 22b which functions as an air inlet. A portion (front-end portion 22a) of the retainer 22 which is located frontward of a substantially central portion of the retainer 22 with respect to the axial direction of the retainer 22 has an inside diameter slightly larger than that of a portion (rear-end portion 22b) of the retainer 22 which is located rearward of the substantially central portion of the retainer 22 with respect to the axial direction of the retainer 22. An annular stepped portion is formed on an inner circumferential portion of the retainer 22 in a connection region between the front-end portion and the rear-end portion of the retainer 22. The stepped portion has a plurality of projections which are arrayed continuously and repeatedly. The plurality of projections project in the axial direction of the retainer 22. Hereinafter, the stepped portion of the retainer 22 at which the plurality of projections are provided is referred to as the "annular projection portion 22c."

The retainer 22 has a plurality of latch pawls 22d formed on the outer circumferential surface of its front-end portion. Further, the retainer 22 has a honeycomb mesh portion 22e which covers an open portion of its rear-end portion (see FIGS. 6 and 7).

The bezel 23 is an annular member. The bezel 23 has a plurality of latch holes 23a formed on its outer circumferential surface. As will be described in detail later, the latch pawls 22d of the retainer 22 are fitted into the respective latch holes 23a. Through this engagement, the bezel 23 is latched (fixed) to the retainer 22.

The airflow adjustment plate 30 includes a closing airflow direction adjustment plate 31, a first rear airflow direction adjustment plate 32, a second rear wind direction adjustment plate 33, a third airflow direction adjustment plate 34, and a first connection member 35 and a second connection member 36 (see FIG. 9). These members are formed of the same material (in the present embodiment, a synthetic resin) in a unitary (inseparable) condition.

The closing airflow direction adjustment plate 31 has a substantially disk-like shape. Specifically, the shape of the closing airflow direction adjustment plate 31 as viewed from the front side is substantially the same as that of a front-end opening portion (front-end portion 21 a) of the inner register 21. Thus, when the airflow adjustment member 30 is positioned at a second rotary position (in the fully-closed state; see FIG. 6), which will be described later, the closing airflow direction adjustment plate 31 closes the front-end opening portion of the inner register 21 by itself.

The first rear airflow direction adjustment plate 32, the second rear airflow direction adjustment plate 33, and the third rear airflow direction adjustment plate 34 each has substantially semi-disk-like shape. The closing airflow direction adjustment plate 31, the first rear airflow direction adjustment plate 32, the second rear airflow direction adjustment plate 33, and the third rear airflow direction adjustment plate 34 are connected in parallel with one another by means of the first connection member 35 and the second connection member 36.

The first connection member 35 includes a connection element 35a, a connection element 35b, and a connection element 35c and has a plate-like shape. Also, the second connection member 36 includes a connection element 36a, a connection element 36b, and a connection element 36c and has a plate-like shape (see FIG. 9).

The first rear airflow direction adjustment plate 32 has a pair of pivots 37, which resemble round shafts, are provided at its respective opposite end portions (respective opposite ends of its substantially rectilinear portion) located on its major-diameter side, and project radially outward. One of the pair of the pivots 37 is inserted into the bearing hole of the sliding member 51, and the other of the pair of the pivots 37 is inserted into the bearing hole 21 d. By virtue of this configuration, the airflow adjustment member 30 pivotally moves about the pivotal axis, which is a straight line connecting the paired pivots 37, in a range from a first rotary position (fully-closed state) shown in FIG. 6 to a second rotary position (fully-opened state) shown in FIG. 7. In addition, an annular member is provided around each pivot 37 so as to form a sliding surface 38 perpendicular to the pivot 37.

Further, the second rear airflow direction adjustment plate 33 has a plate-like latch arm portion 39 provided at one of end portions (opposite ends of its substantially rectilinear portion) located on its major-diameter side. The latch arm portion 39 has a projection 39a, which, when the airflow adjustment member 30 is supported in the inner register 21, projects toward the inner circumferential surface of the inner register 21.

The closing airflow direction adjustment plate 31, the first rear airflow direction adjustment plate 32, the second rear airflow direction adjustment plate 33, and the third rear airflow direction adjustment plate 34 are described below with respect to shape and the like with reference to FIG. 8. FIG. 8 is a side view of the airflow adjustment member 30 as viewed from a direction parallel to a pivotal axis (a straight line connecting the paired pivots 37) RA. In the following description, a plane which is perpendicular to the closing airflow direction adjustment plate 31 and contains the pivotal axis RA is defined as a reference plane RS and is indicated by the broken line in FIG. 8. The distances between the reference plane RS and front-end portions of the airflow direction adjustment plates (front-lengths) are as follows.

The front-length of the closing airflow direction adjustment plate 31 (distance L10 between the reference plane RS and a front-end portion 31 a of the closing airflow direction adjustment plate 31) is longer than any front-length of the front-lengths (i.e., L20, L30, and L40) of the rear airflow direction adjustment plates (i.e., the first to third airflow direction adjustment plates 32 to 34).

The front-length of the rear airflow direction adjustment plate reduces in the order of the first rear airflow direction adjustment plate 32 (distance L20 between the reference plane RS and the front-end portion 32a of the first rear airflow direction adjustment plate 32), the second rear airflow direction adjustment plate 33 (distance L30 between the reference plane RS and the front-end portion 33a of the second rear airflow direction adjustment plate 33), and the third rear airflow direction adjustment plate 34 (distance L40 between the reference plane RS and the front-end portion 34a of the third rear airflow direction adjustment plate 34). In other words, the front-length (distance L10) of the closing airflow direction adjustment plate 31 is the largest, and the front-length of one rear airflow direction adjustment plate located farther from the closing airflow direction adjustment plate 31 than the other rear airflow direction adjustment plate is smaller than the front-length of the other rear airflow direction adjustment plate.

Rear-end portions of the rear airflow direction adjustment plates (i.e., a rear-end portion 32b of the first rear airflow direction adjustment plate 32, a rear-end portion 33b of the second rear airflow direction adjustment plate 33, and a rear-end portion 34b of the third rear airflow direction adjustment plate 34) reside in the reference plane RS.

Next, the first connection member 35 and the second connection member 36 are described with reference to FIG. 9. FIG. 9 is "a front view of the airflow adjustment member 30" as viewed in a direction parallel to the axis of the inner register 21 and from the front side of the inner register 21, showing the airflow adjustment member 30 supported by the inner register 21 and positioned in the second rotary position (fully-opened state). As shown in FIG. 9, the first connection member 35 is formed so as to be curved along a portion of the inner surface of the inner register 21 near the first connection member 35. The second connection member 36 is formed so as to be curved along a portion of the inner surface of the inner register 21 near the second connection member 36.

Further, as shown in FIG. 9, a portion of the connection element 35a, which partially constitutes the first connection member 35, in the vicinity of the closing airflow direction adjustment plate 31 is spaced apart from the inner surface of the inner register 21 by the distance D1. Similar to the connection element 35a, a portion of the connection element 36a, which partially constitutes the second connection member 36, in the vicinity of the closing airflow direction adjustment plate 31 is spaced apart from the inner surface of the inner register 21 by the distance D1. Further, the connection element 35b, the connection element 35c, the connection element 36b, and the connection element 36c are spaced apart from the inner surface of the inner register 21 by respectively predetermined distances (first flow channel ensuring distances; in the present embodiment, equal to or larger than D1). Namely, the first connection member 35 connects the airflow direction adjustment plates while being spaced apart from a portion of the inner surface of the inner register 21 near the first connection member 35 by the distance D1 or more. Similarly, the second connection member 36 connects the airflow direction adjustment plates while being spaced apart from a portion of the inner surface of the inner register 21 near the second connection member 36 by the distance D1 or more.

Further, as shown in FIG. 9, "a portion of the connection element 35a which is connected to the closing airflow direction adjustment plate 31" and "a portion of the connection element 36a which is connected to the closing airflow direction adjustment plate 31" are spaced apart from each other by the distance D2 in a direction parallel to the pivotal axis RA. Further, a portion of the connection element 35a and a portion of the connection element 36a which face each other are spaced apart from each other by a predetermined distance (in the present embodiment, a distance smaller than D2).

Similarly, a portion of the connection element 35b and a portion of the connection element 36b which face each other are spaced apart from each other by a predetermined distance (in the present embodiment, a distance smaller than D2). A portion of the connection element 35c and a portion of the connection element 36c which face each other are spaced apart from each other by a predetermined distance (in the present embodiment, a distance smaller than D2). Namely, the first connection member 35 and the second connection member 36 connect the airflow direction adjustment plates while being spaced apart from each other by a predetermined distance (second flow channel ensuring distance) or more in a direction parallel to the pivotal axis RA.

FIG. 10 is a sectional view of the closing airflow direction adjustment plate 31 as cut by a plane along line 2-2 of FIG. 4. As shown in FIG. 10, the closing surface of the closing airflow direction adjustment plate 31 has a plurality of grooves 31 c formed thereon in parallel with one another.

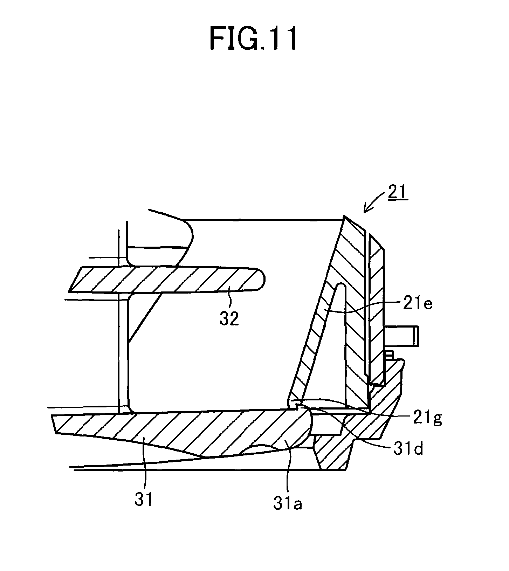

FIG. 11 is an enlarged sectional view of the front-end portion 31 a of the closing airflow direction adjustment plate 31 and its periphery as viewed when the closing airflow direction adjustment plate 31 is in the fully-closed state shown in FIG. 6. The front-end portion 31a of the closing airflow direction adjustment plate 31 has a projection 31d (first projection, first engagement portion) formed at its circumferential edge portion. The projection 31d is formed so as to project toward the interior of the inner register 21 when the airflow adjustment member 30 is positioned at the second rotary position (fully-closed state). On the other hand, a front inner circumferential edge portion of the inner register 21 has a V-shaped section so as to form the above-mentioned inclined portion 21e. The tip of the inclined portion 21e has a projection 21g (second projection, second engagement portion) formed thereon. The projection 21g is formed so as to project toward the closing airflow direction adjustment plate 31 when the airflow adjustment member 30 is positioned at the second rotary position (fully-closed state). By virtue of the above-mentioned configuration, when the airflow adjustment member 30 is positioned at the second rotary position (fully-closed state), the projection 31d formed on the closing airflow direction adjustment plate 31 is engaged with the projection 21 g formed on the tip of the inclined portion 21 e of the inner register 21.

The above-mentioned members are assembled together as described below, thereby providing the air blowing device 10. A method of assembling the air blowing device 10 will next be described below.

First, the sliding member 51 is inserted into the mounting groove 21c of the inner register 21. Then, one of the pair of the pivots 37 of the airflow adjustment member 30 is inserted into the bearing hole 21 d of the inner register 21, and the other one of the pair of the pivots 37 is inserted into the bearing hole of the sliding member 51 of the inner register 21. By this procedure, the airflow adjustment member 30 is pivotally mounted in the inner register 21.

Next, the operation load application member 40 is attached to the mounting hole portion 21f of the inner register 21. Subsequently, the inner register 21 in which the airflow adjustment member 30 is mounted is inserted into the retainer 22 through the opening portion 22a of the retainer 22. At this time, the curved projections 43 formed on the respective tips of the forked leg portion 42 of the operation load application member 40 are brought into contact with the annular projection portion 22c of the retainer 22. Then, the bezel 23 is attached to the opening portion 22a of the retainer 22. At this time, the latch pawls 22d of the retainer 22 are latched in the respective latch holes 23a of the bezel 23. As a result, the curved projections 43 formed on the respective tips of the forked leg portion 42 of the operation load application member 40 are elastically pressed against the annular projection portion 22c of the retainer 22.

By means of assembling the members together as mentioned above, the air blowing device 10 is obtained.

In the thus-configured air blowing device 10, when the inner register 21 in which the operation load application member 40 is retained is retained in the retainer 22, the above-mentioned curved projections 43 are engaged with the annular projection portion 22c. At this time, the forked leg portion 42 is elastically deformed so as to be bent in a direction away from the annular projection portion 22c. Thus, the curved projections 43 are pressed against the annular projection portion 22c. Accordingly, when the inner register 21 is rotated about its axis, the curved projections 43 move over projections of the annular projection portion 22c one after another while being in contact with the annular projection portion 22c. As a result, when the airflow adjustment member 30 is rotated together with the inner register 21 about the axis of the inner register 21, an appropriate operation load and an appropriate operation feel can be obtained.

Further, the airflow adjustment member 30 pivotally moves about the pivots 37 (pivotal axis RA) in a range from the first rotary position (fully-closed state) shown in FIG. 6 to the second rotary position (fully-opened state) shown in FIG. 7. When the airflow adjustment member 30 pivotally moves, the projection 39a formed at the tip of the latch arm portion 39 of the second rear airflow direction adjustment plate 33 slides on a contact region provided on the inner surface of the inner register 21. When the airflow adjustment member 30 reaches a position in the vicinity of the first rotary position (fully-closed state) and then moves toward the first rotary position (fully-closed state), the projection 39a moves over a mound portion formed on the contact region. This provides an appropriate operation feel when the airflow adjustment member 30 is brought into the fully-closed state.

The above-mentioned air blowing device 10 is attached to an air outlet of an air conditioner provided in the interior of an automobile or the like. When the airflow adjustment member 30 is brought into the fully-closed state (see FIG. 6), airflow to the interior of an automobile or the like can be shut off. When an upper portion (in the vicinity of an elliptic recess in FIG. 4) of the closing airflow direction adjustment plate 31 in the fully-closed state is pressed toward the interior of the air blowing device 10, the airflow adjustment member 30 pivotally moves about the pivots 37. Continuation of the pivotal movement brings the airflow adjustment member 30 into the fully-opened state (see FIG. 7). Further, by virtue of friction between the sliding member 51 and the pivot 37 inserted into the sliding member 51, the airflow adjustment member 30 can be held at any position (i.e., the airflow adjustment member 30 can maintain a predetermined wind direction adjustment state) in a range from the fully-closed state to the fully-opened state. Additionally, as mentioned above, the airflow adjustment member 30 can be rotated together with the inner register 21 about the axis of the inner register 21. Through this pivotal movement and this rotation, the blowing direction of airflow can be changed.

As described above, the air blowing device according to the embodiment of the present invention comprises:
a tubular body 20 (see FIG. 4) configured to form an air outflow channel, the tubular body 20 having a rear-end open portion allowing an air to flow into the tubular body and a front-end open portion allowing the air to blow out from the tubular body; and
an airflow adjustment member 30 (see FIG. 5) supported in the tubular body 20 so as to be pivotally movable about a pivotal axis RA perpendicular to an axis of the tubular body 20 and configured to adjust a direction of the air blown out from the tubular body 20.

The airflow adjustment member 30 includes: a connection member (the first connection member 35 and the second connection member 36 in FIG. 9); and at least three airflow direction adjustment plates (in the present embodiment, four airflow direction adjustment plates consisting of the closing airflow direction adjustment plate 31, the first rear airflow direction adjustment plate 32, the second rear airflow direction adjustment plate 33, and the third rear airflow direction adjustment plate 34 in FIG. 9) being connected in parallel with one another by the connection member, the airflow adjustment member 30 being configured to be pivotally movable about the pivotal axis RA in a range from a first rotary position (see FIG. 6) to a second rotary position (see FIG. 7).

The connection member and the at least three airflow direction adjustment plates are formed of same material in an inseparable unitary manner (see, for example, FIG. 8).

One of a pair of airflow direction adjustment plates (the closing airflow direction adjustment plate 31 and the third rear airflow direction adjustment plate 34) located at opposite ends of the at least three airflow direction adjustment plates is a closing airflow direction adjustment plate (i.e., the closing airflow direction adjustment plate 31), the closing airflow direction adjustment plate 31 is configured to close the front-end open portion of the tubular body when the airflow adjustment member is positioned at the first rotary position (see FIG. 6) and to be parallel to the axis of the tubular body when the airflow adjustment member is positioned at the second rotary position (see FIG. 7).

The closing airflow direction adjustment plate 31 has the largest distance in distances each from a front-end portion of each of the at least three airflow direction adjustment plates (the end portion 31a, the end portion 32a, the end portion 33a, and the end portion 34a in FIG. 8) to a reference plane RS perpendicular to the closing airflow direction adjustment plate 31 and including the pivotal axis when the airflow adjustment member is positioned at the second rotary position, and the other one of the at least three airflow direction adjustment plates located farther from the closing airflow direction adjustment plate than the other different one of the at least three airflow direction adjustment plates has smaller distance from a front-end portion thereof to the reference plane than the different one (see FIG. 8).

In the airflow adjustment member of the present invention, the plurality of airflow direction adjustment plates (31 to 34) used to form the airflow adjustment member 30 and the connection members (35 and 36) are formed unitarily. Thus, since the number of steps of manufacture of the air blowing device 10 and man-hours of assembly can be reduced, the cost of manufacture of the air blowing device 10 can be reduced. Further, when the airflow adjustment member 30 is in the fully-closed state, the opening portion of the tubular body is closed by one closing airflow direction adjustment plate 31. Thus, the appearance of the closing surface at the time of air supply shutoff can be enhanced.

Further, in the air blowing device 10 according to the embodiment of the present invention, the front-length (L10) of the closing airflow direction adjustment plate 31 is longer than the front-lengths (L20 to L40) of the airflow direction adjustment plates other than the closing airflow direction adjustment plate. Thus, at the time of air supply shutoff, the opening portion of the tubular body can be reliably closed. Further, as described with reference to FIGS. 1 and 2, when the opening portion is opened (when air is blown out in a predetermined direction), a high airflow rate can be ensured.

Additionally, in the air blowing device 10, and one airflow direction adjustment plate located farther from the closing airflow direction adjustment plate than the other airflow direction adjustment plate has smaller front-length than the other airflow direction adjustment plate. Thus, the rear airflow direction adjustment plates do not hinder the pivotal movement of the entire airflow adjustment member. Further, since the front-lengths of the airflow direction adjustment plates decrease sequentially, in the fully-opened state, the airflow adjustment member has a favorable appearance.

Further, the air blowing device 10 can be configured as follows: the closing airflow direction adjustment plate 31 has the largest distance in distances each from a rear-end portion of each of the at least three airflow direction adjustment plates (each of the end portion 31 b, the end portion 32b, the end portion 33b, and the end portion 34b in FIG. 8) to the reference plane RS when the airflow adjustment member 30 is positioned at the second rotary position (see FIG. 8).

Further, the air blowing device 10 can be configured as follows: each of the at least three airflow direction adjustment plates except for the closing airflow direction adjustment plate 31 has a distance from the rear-end portion thereof (the end portion 32b, the end portion 33b, and the end portion 34b in FIG. 8) to the reference plane RS (in the present embodiment, the distances are zero) smaller than the corresponding distance from the front-end portion thereof (the end portion 32a, the end portion 33a, and the end portion 34a in FIG. 8) to the reference plane RS.

Further, the air blowing device 10 can be configured as follows: each of the at least three airflow direction adjustment plates except for the closing airflow direction adjustment plate 31 has a rear-end portion (the end portion 32b, the end portion 33b, and the end portion 34b in FIG. 8) residing in the reference plane RS or in a plane located toward the rear-end of the tubular body with respect to the reference plane and in parallel with the reference plane (in the present embodiment, the end portion 32b, the end portion 33b, and the end portion 34b reside in the reference plane RS).

By virtue of the above-mentioned configuration of the airflow direction adjustment plates, the effective rear-end opening distance as measured when the airflow adjustment member is in the wind direction adjusting state can be increased. Thus, a sufficient inclined airflow rate can be ensured.

Further, the air blowing device 10 can be configured as follows: a distance (see the distance D1 in FIG. 9) from an inner surface of the tubular body to a portion of the connection member (the first connection member 35 and the second connection member 36 in FIG. 9) which is the closest to the inner surface of the tubular body with respect to a direction parallel to the pivotal axis RA (see FIG. 9) is equal to or larger than a predetermined first flow channel ensuring distance.

Further, the air blowing device 10 can be configured as follows: the first connection member 35 is curved so as to extend along a portion of the inner surface of the tubular body near the first connection member 35 when the airflow adjustment member 30 is positioned at the second rotary position, and

The second connection member 36 is curved so as to extend along a portion of the inner surface of the tubular body near the second connection member 36 when the airflow adjustment member 30 is positioned at the second rotary position (see FIG. 9).

By virtue of the above-mentioned configuration of the connection members (35 and 36), there can be suppressed a drop in the effective cross-sectional area of flow channel in the air blowing device 10. Thus, a sufficient airflow rate can be ensured.

Further, the air blowing device 10 can be configured as follows: one of two opposite surfaces of the closing airflow direction adjustment plate 31 exposed to the exterior of the tubular body (in FIG. 6, a surface located on the outside of the tubular body 20) when the airflow adjustment member is positioned at the first rotary position has at least one recess portion formed thereon (in the present embodiment, the plurality of grooves 31c formed in parallel with one another in FIG. 10).

By virtue of the provision of the above-mentioned recess portions on the closing airflow direction adjustment plate 31, lattice patterns are formed on the closing surface, so that the appearance of the closing surface can be further enhanced. Further, since, in molding the airflow adjustment member, the occurrence of a sink mark can be suppressed, the closing airflow direction adjustment plate having excellent appearance and dimensional accuracy can be obtained.

While the present invention has been described in detail and with reference to specific embodiments thereof, it will be apparent to one skilled in the art that various changes and modifications can be made therein without departing from the spirit and scope thereof.

For example, in the above-described embodiment of the present invention, the airflow adjustment member consists of four airflow direction adjustment plates (i.e., one closing airflow direction adjustment plate 31 and three rear airflow direction adjustment plates 32 to 34). However, in the present invention, the airflow adjustment member may have at least three airflow direction adjustment plates. The number of airflow direction adjustment plates is not limited to four. Specifically, in the present invention, the number of airflow direction adjustment plates may be three (one closing airflow direction adjustment plate and two rear airflow direction adjustment plates) or five or more (one closing airflow direction adjustment plate and four or more rear airflow direction adjustment plates).

The present application is based on Japanese Patent Application No. 2008-279748 filed on October 30, 2008, and the contents of the application are incorporated herein by reference.

## Claims

1. An air blowing device comprising:
a tubular body configured to form an air outflow channel, the tubular body having a rear-end open portion allowing an air to flow into the tubular body and a front-end open portion allowing the air to blow out from the tubular body; and
an airflow adjustment member supported in the tubular body so as to be pivotally movable about a pivotal axis perpendicular to an axis of the tubular body and configured to adjust a direction of the air blown out from the tubular body,
the airflow adjustment member including: a connection member; and at least three airflow direction adjustment plates being connected in parallel with one another by the connection member, the airflow adjustment member being configured to be pivotally movable about the pivotal axis in a range from a first rotary position to a second rotary position,
the connection member and the at least three airflow direction adjustment plates being formed of same material in an inseparable unitary manner,
one of a pair of airflow direction adjustment plates located at opposite ends of the at least three airflow direction adjustment plates being a closing airflow direction adjustment plate, the closing airflow direction adjustment plate being configured to close the front-end open portion of the tubular body upon the airflow adjustment member being positioned at the first rotary position and to be parallel to the axis of the tubular body upon the airflow adjustment member being positioned at the second rotary position, and
the closing airflow direction adjustment plate having the largest distance in distances each from a front-end portion of each of the at least three airflow direction adjustment plates to a reference plane perpendicular to the closing airflow direction adjustment plate and including the pivotal axis upon the airflow adjustment member being positioned at the second rotary position, and the other one of the at least three airflow direction adjustment plates located farther from the closing airflow direction adjustment plate than the other different one of the at least three airflow direction adjustment plates having smaller distance from a front-end portion thereof to the reference plane than the different one.

2. The air blowing device according to claim 1, further comprising,
the closing airflow direction adjustment plate having the largest distance in distances each from a rear-end portion of each of the at least three airflow direction adjustment plates to the reference plane upon the airflow adjustment member being positioned at the second rotary position.

3. The air blowing device according to claim 1 or 2, further comprising,
each of the at least three airflow direction adjustment plates except for the closing airflow direction adjustment plate having a distance from the rear-end portion thereof to the reference plane smaller than the corresponding distance from the front-end portion thereof to the reference plane.

4. The air blowing device according to claim 2 or 3, further comprising,
each of the at least three airflow direction adjustment plates except for the closing airflow direction adjustment plate having a rear-end portion residing in the reference plane.

5. The air blowing device according to any one of claims 1 to 4, further comprising,
a distance from an inner surface of the tubular body to a portion of the connection member being the closest to the inner surface of the tubular body with respect to a direction parallel to the pivotal axis being equal to or larger than a predetermined first flow channel ensuring distance.

6. The air blowing device according to claim 5, further comprising,
the connection member including a first connection member and a second connection member, and
the first connection member and the second connection member being spaced apart from each other by a predetermined second flow channel ensuring distance or more with respect to a direction parallel to the pivotal axis.

7. The air blowing device according to claim 6, further comprising,
the first connection member being curved so as to extend along a portion of the inner surface of the tubular body near the first connection member upon the airflow adjustment member being positioned at the second rotary position, and
the second connection member being curved so as to extend along a portion of the inner surface of the tubular body near the second connection member upon the airflow adjustment member being positioned at the second rotary position.

8. The air blowing device according to any one of claims 1 to 7, further comprising,
one of two opposite surfaces of the closing airflow direction adjustment plate exposed to the exterior of the tubular body upon the airflow adjustment member being positioned at the first rotary position having at least one recess portion formed thereon.

9. The air blowing device according to claim 8, further comprising,
the recess portion being a plurality of grooves formed in parallel with one another.
